Europäisches Patentamt

European Patent Office

Office européen des brevets

(11) Publication number: **0 185 304 B1**

# EUROPEAN PATENT SPECIFICATION

(45) Date of publication of patent specification: **15.04.92**    (51) Int. Cl.⁵: **H02G 15/25**, H02G 15/24

(21) Application number: **85115746.1**

(22) Date of filing: **11.12.85**

(54) **Stop joint between cables having an extruded insulation and cables having an insulation aided by a dielectric fluid.**

(30) Priority: **17.12.84 IT 2409284**

(43) Date of publication of application:
**25.06.86 Bulletin 86/26**

(45) Publication of the grant of the patent:
**15.04.92 Bulletin 92/16**

(84) Designated Contracting States:
**AT BE CH DE FR GB LI LU NL SE**

(56) References cited:
**DE-U- 7 807 166**
**GB-A- 752 376**
**GB-A- 782 256**

(73) Proprietor: **PIRELLI CAVI S.p.A.**
**Piazzale Cadorna, 5**
**I-20123 Milan(IT)**

(72) Inventor: **Giorgio, Giancarlo**
**Piazza Sraffa, 4**
**Milan(IT)**
Inventor: **Parmigiani, Bruno**
**Viale Sarca, 87**
**Milan(IT)**

(74) Representative: **Giannesi, Pier Giovanni et al**
**Pirelli S.p.A. Direzione Brevetti Piazzale**
**Cadorna, 5**
**I-20123 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention refers to a stop joint between cables having an extruded insulation and cables having their insulation including a dielectric fluid, as the oil-filled cables, the so-called "pipe" type cables, the gas-insulated cables, the compound-insulated cables, both of single-core and multi-core type cables.

At present to effect the connection between a cable having an extruded insulation and a cable having an insulation including a dielectric fluid recourse is made to joints, an example of which is described in DE-U-7 807 166 .

According to this document on the end of each one of the two cables to be connected there is mounted a sealing end of a type compatible with the cable to which it is applied. The lugs of the sealing ends are then mechanically and electrically connected to each other and a metal box, filled with an insulating fluid, encloses the two sealing ends which, together with the insulating material filling the metal box form a through insulator.

In another known stop joint, disclosed in GB-A-782 256, is described a through insulator consisting of a body based on epoxy resins embedding a metal bar extending theretrough and projecting therefrom to which a metal box is tightly connected.

The known joints, although differing from each other due to the particular configurations given to the sealing ends and to the box enclosing these latter, have a very complex structure and therefore their realization require a longer time than that necessary for effecting joints between cables of the same type.

Moreover the radial encumbrance of the known joints referred to by the present invention is greater than that of the joints between cables of the same type owing to the need of providing a box for containing the sealing ends filled with an insulating fluid. This constitutes a great drawback in all those situations where the laying of an electric line portion, which comprises cables having an extruded insulation and cables having an insulation including a dielectric fluid, has to take place in pre-existing structures that often impose limitations in radial direction for the components of the line. Moreover in the case of an already laid line formed by portions of cables, for instance all oil filled cables, it can be impossible to substitute a portion of oil filled cable with a cable having an extruded insulation just owing to the great radial encumbrance of the known joints necessary to carry out the connection between the two different types of cables.

In fact, if the cavity where the joint has to be housed is in a constructive work, as for instance the structure of a bridge, the foundation of a building and the like and has radial dimensions suitable only to a joint between oil-filled cables, said cavity is not able to house a known joint of the type referred to by the present invention owing to the greater radial dimensions of this latter.

The aim of the present invention is a stop joint between cables having an extruded insulation and cables having an insulation including a dielectric fluid that has radial dimensions equal to those of the joints between cables of the same type and that has a simple structure and therefore can be rapidly carried out.

Object of the present invention is a stop joint between a cable (20) having an extruded insulation and a cable (10) having an insulation including a dielectric fluid, the joint comprising at least a through insulator (1) consisting of a body (2) based on epoxy resins embedding a metal bar (5) whose ends (6, 7) project from opposite ends (3, 4) of the through insulator (1) and a metal box (16), characterized by the metal box (16) being tightly connected to the through insulator body (2) and to the metal sheath (13) of the cable (10) having an insulation including a dielectric fluid, said box (16) being filled with the same dielectric fluid as the cable (10) and enclosing a first mechanical and electrical connection (8) between the conductor (9) of this latter cable (10) and the bar (5) of the through insulator (1) and further enclosing a stratified insulation (14) encircling the first connection, said end (3) of the through insulator (1) is directed toward the cable (10) with the insulation including the dielectric fluid and has a frusto-conical shape, while the end (4) is directed toward the cable (20) with the extruded insulation and has a cylindrical shape, and by a monolithic sleeve (23) which embraces the cylindrical end (4) of the insulator (1) and the end portion of the cable (20) with the extruded insulation enclosing a second mechanical and electrical connection (18) between the conductor (19) of this latter cable (20) and the bar (5) of the through insulator (1).

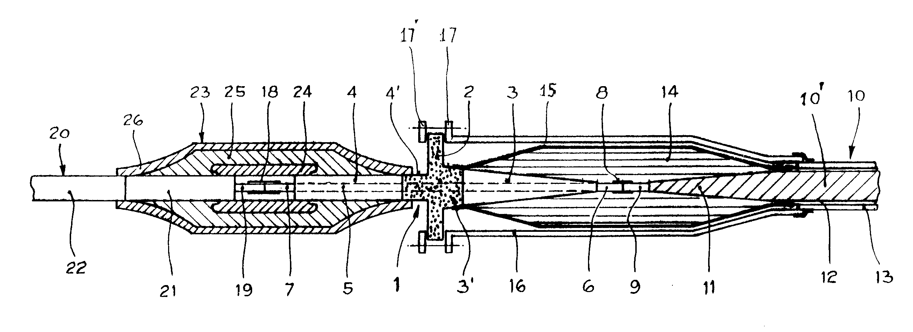

The present invention will be better understood by the following detailed description made by way of non limiting example, with reference to the figure of the attached sheet of drawing that is a section of the joint according to the invention.

As shown in the figure the joint comprises a through insulator 1 provided with a central body 2 and two ends 3 and 4.

The through insulator 1 is constituted by an insulating mass in a compound based on epoxi resins of type known per se, embedding a through conductor constituted by a bar 5 of metal material, for instance of aluminium.

The end portion 3 of the through insulator has a frusto-conical shape and the end portion 4 of the through insulator has a cylindrical shape.

The central body 2 of the insulator has the shape of a plate provided with flat faces.

The bar 5 constituting the conductor of the through insulator has the ends 6 and 7 projecting from the insulating material of this insulator.

The end 6 of the bar 5 is mechanically and electrically connected, through a ferrule 8 or a welding and the like, to the conductor 9 of a cable having an insulation aided by a fluid under pressure, that in the particular embodiment shown in the figure is an oil-filled cable 10.

The end of the oil-filled cable 10 connected in the joint has been previously prepared by stripping gradually the components.

In particular the components that have been stripped are the end 9 of the cable 10 conductor, the stratified solid insulation 10' of the cable so that its end 11 has a frusto conical shape, the outer semiconductive layer 12 and the sealing metal sheath 13.

A layer 14 of insulating material is present on the mechanical and electrical jointing zone of the conductors 6 and 9. The layer 14 can be obtained by winding a plurality of tapes of insulating material as for instance tapes of cellulose paper and the like. In alternative the layer 14 is formed by superimposing a plurality of cylindrical sleeves, each one is formed in place through the winding of tapes of insulating material radiusing each sleeve at the tapered surfaces of the through insulator and of the cable insulation through windings of tapes of insulating crêpe papers.

The layer 14 embraces the shaped end 11, of the stratified insulation of the cable 10 and the frusto-conical end 3 of the through insulator, with the exception of the root 3' of said end.

The ends of the layer 14 are tapered and a winding of a semiconductive tape covers the layer 14 forming a layer 15 superimposed to the outer semiconductive screen 12 of the oil filled cable 10 and to the root 3' of the ends 3, said layer 15 projecting from the central body 2 of the through insulator, both covered with a semiconductive varnish.

A metal box 16 filled with the insulating fluid oil of the cable 10 encircles the insulating layer 14 and is tightly connected, for instance through a welding, to the outer metal sheath 13 of the oil filled cable at one end, while at the other end said box 16 is tightly connected through the flange 17 and counter-flange 17' to the central body 2 of the through insulator.

As previously said, a layer of semiconductive varnish covers the central body 2 of the through insulator. Also the roots 3' and 4' of the ends 3 and 4 of the through insulator are covered with a layer of semiconductive varnish.

Moreover the cylindrical end 5 of the through insulator, except its own root 4', is covered with a layer of insulating resin, in particular epoxy resin, which is cold cross-linked so as to give a very smooth surface to said end.

The end portion 7 of the bar 5 of the through insulator projects from the cylindrical end 4 of this latter.

The end of the conductor 19 of a cable having an extruded insulation 20 is mechanically and electrically connected at the end 7 of the bar 5 through means known per se, as a ferrule 18 or a welding.

In particular the final portion of the cable having an extruded insulation 20 has its own components stepwise stripped and precisely the conductor 19, the extruded insulation 21, whose outer diameter is equal to the outer diameter of the cylindrical end 4 of the through insulator and the outer semiconductive layer 22.

A metal adaptor, of type known per se and not shown, is interposed between the ends facing each other of the extruded insulation 21 of the cable 20 and of the end 5 of the through insulator, and encloses in its own cavity the ferrule 18.

A monolithic sleeve 23 for joints between extruded insulation cables, of type known per se, is fitted around the mechanical and electrical jointing zone between the conductor 19 of the cable having an extruded insulation 20 and the conductor 5 of the through insulator. Said monolithic sleeve, starting from the inside toward the outside, comprises a field deflector 24, surrounded by an insulating layer 25 which is in its turn covered with a semiconductive layer 26 that puts into communication the semiconductive layer 22 of the cable 20 having an extruded insulation with the surface made semiconductive by the presence of the semiconductive varnish existing on the root 4' of the end 4 and on the central body 2 of the through insulator 1.

The previously described joint, represented in the figure, carries out the connection between a single core cable having an extruded insulation and a single core oil-filled cable.

But this must not understood in a limiting sense since by means of the joints according to the present invention it is possible to effect connections between multi-core cables, for instance oil-filled cables and multi-core cables having an extruded insulation.

In this case, not shown in the figures, the through insulators to be provided will be as many as the cores of the cables to be connected are. The only difference will be that the central bodies 2 of the through insulators will be connected to each other in a tight manner.

For instance the central bodies 2 will be closely connected to one another originating a single monolithic plate of an epoxy resin covered with a semiconductive varnish.

In alternative said plate can be of metal material, for instance of non-magnetic steel and provide as many holes as the epoxy resins based through insulators are, to tightly receive these latter.

From the above description of an embodiment according to the invention it is understood that all the aimed purposes are achieved.

Firstly the encumbrance in radial direction of a joint according to the present invention has a value of the same order of magnitude as that of the known joints between cables of the same type, i.e. for cables, both having an extruded insulation or for cables, both having an insulation aided by a dielectric fluid.

In fact, both for the connection between the through insulator and the cable having an insulation aided by a dielectric fluid, and for the connection between the through insulator and the cable having an extruded insulation, the insulation thickness superimposed to the jointing zone is equal to that between cables of homogeneous type.

Moreover, also the realization of the joint according to the invention is rapid and simple since it consists of assembling a through insulator of prefabricated type, a monolithic sleeve prefabricated too, a sealing box prefabricated too and of forming an insulating layer 14 through the winding of tapes generally used in the realization of joints between cables having an insulation aided by a dielectric fluid.

Although a particular embodiment of a joint according to the invention has been illustrated and described, it is understood that the invention includes in its scope any other alternative embodiment within the definition of the claims accessible to a technician of this field.

## Claims

1. Stop joint between a cable (20) having an extruded insulation and a cable (10) having an insulation including a dielectric fluid, the joint comprising at least a through insulator (1) consisting of a body (2) based on epoxy resins embedding a metal bar (5) whose ends (6, 7) project from opposite ends (3, 4) of the through insulator (1) and a metal box (16), characterized by the metal box (16) being tightly connected to the through insulator body (2) and to the metal sheath (13) of the cable (10) having an insulation including a dielectric fluid, said box (16) being filled with the same dielectric fluid as the cable (10) and enclosing a first mechanical and electrical connection (8) between the conductor (9) of this latter cable (10) and the bar (5) of the through insulator (1) and further enclosing a stratified insulation (14) encircling the first connection, said end (3) of the through insulator (1) is directed toward the cable (10) with the insulation including the dielectric fluid and has a frusto-conical shape, while the end (4) is directed toward the cable (20) with the extruded insulation and has a cylindrical shape, and by a monolithic sleeve (23) which embraces the cylindrical end (4) of the insulator (1) and the end portion of the cable (20) with the extruded insulation enclosing a second mechanical and electrical connection (18) between the conductor (19) of this latter cable (20) and the bar (5) of the through insulator (1).

2. Joint according to claim 1, characterized by the fact that the central body (2) of the through insulator and the roots (3', 4') of the ends (3, 4) of the central body are covered with a semiconductive varnish.

3. Joint according to claim 1, characterized by the fact that the surface of the cylindrical end (4) of the through insulator (1) is covered with a layer of cold cross-linked epoxy resin.

## Revendications

1. Joint d'arrêt entre un câble (20) comportant une isolation extrudée et un câble (10) comportant une isolation incluant un fluide diélectrique, le joint comprenant au moins un isolant de traversée (1), consistant en un corps (2) à base de résines époxy encastrant une barre métallique (5) dont les extrémités (6, 7) font saillie à partir d'extrémités opposées (3, 4) de l'isolant de traversée (1), et un boîtier métallique (16), caractérisé en ce que le boîtier métallique (16) est connecté de façon étanche au corps (2) d'isolant de traversé et à l'enveloppe métallique (13) du câble (10) qui comporte une isolation comportant un fluide diélectrique, ledit boîtier (16) étant rempli du même fluide diélectrique que le câble (10) et enfermant une première connexion mécanique et électrique (8) entre le conducteur (9) de ce dernier câble (10) et la barre (5) de l'isolant de traversée (1) et enfermant en outre une isolation stratifiée (14) encerclant la première connexion, ladite extrémité (3) de l'isolant de traversée (1) est dirigée vers le câble (10) dont l'isolation comprend le fluide diélectrique et présente une forme tronconique tandis que l'extrémité (4) est dirigée vers le câble (20) à isolation extrudée et est d'une forme cylindrique, et en ce qu'un manchon monolithique (23), qui entoure l'extrémité cylindrique (4) de l'isolant (1) et la partie d'extrémité du câble (20) à isolant extrudé, enferme une deuxième connexion mécanique et électrique (18) entre le conducteur (19) de ce dernier câble (20) et la barre (5) de l'isolant de traversée (1).

2. Joint selon la revendication 1, caractérisé par le fait que le corps central (2) de l'isolant de traversée et les racines (3', 4') des extrémités (3, 4) du corps central sont couverts à l'aide d'un vernis semi-conducteur.

3. Joint selon la revendication 1, caractérisé par le fait que la surface de l'extrémité cylindrique (4) de l'isolant de traversée (1) est recouverte d'une couche de résine époxy réticulée à froid.

**Patentansprüche**

1. Halteverbindung zwischen einem Kabel (20), welches eine extrudierte Isolierung hat, und einem Kabel (10), welches eine Isolierung hat, die ein dielektrisches Fluidum umfaßt, wobei die Verbindung wenigstens einen durchgehenden Isolator (1), der aus einem Körper (2) besteht, welcher auf der Basis von Epoxiharzen gebildet ist und einen Metallstab (5) einbettet, dessen Enden (6,7) von gegenüberliegenden Enden (3,4) des durchgehenden Isolators (1) vorragen, und ein Metallgehäuse (16) aufweist,
dadurch **gekennzeichnet,**
daß das Metallgehäuse (16) mit dem Körper (2) des durchgehenden Isolators und mit dem Metallmantel (13) des Kabels (10), welches eine Isolierung hat, die ein dielektrisches Fluidum umfaßt, dicht verbunden ist, das Gehäuse (16) mit dem gleichen dielektrischen Fluidum wie das Kabel (10) gefüllt ist und eine erste mechanische und elektrische Verbindung (8) zwischen dem Leiter (9) des letzteren Kabels (10) und dem Stab (5) des durchgehenden Isolators (1) und weiterhin eine Schichtisolierung (14) umschließt, welche die erste Verbindung umgibt, das Ende (3) des durchgehenden Isolators (1) in Richtung gegen das Kabel (10) mit der Isolierung, welche das dielektrische Fluidum umfaßt, gerichtet ist und kegelstumpfförmige Gestalt hat, während das Ende (4) in Richtung gegen das Kabel (20) mit der extrudierten Isolierung gerichtet ist und zylindrische Gestalt hat, und daß eine monolithische Hülse (23), vorgesehen ist, welche das zylindrische Ende (4) des Isolators (1) und den Endteil des Kabels (20) mit der extrudierten Isolierung umgreift, der eine zweite mechanische und elektrische Verbindung (18) zwischen dem Leiter (19) des letzteren Kabels (20) und dem Stab (5) des durchgehenden Isolators (1) umschließt.

2. Verbindung nach Anspruch 1, dadurch gekennzeichnet, daß der mittlere Körper (2) des durchgehenden Isolators und die Füße (3', 4') der Enden (3,4) des mittleren Körpers mit einem halbleitenden Lack bedeckt sind.

3. Verbindung nach Anspruch 1, dadurch gekennzeichnet, daß die Oberfläche des zylindrischen Endes ((4) des durchgehenden Isolators (1) mit einer Schicht aus kaltvernetztem Epoxiharz bedeckt ist.